Europäisches Patentamt

European Patent Office

Office européen des brevets

(19)

(11) Numéro de publication : **0 244 314 B1**

(12) **FASCICULE DE BREVET EUROPÉEN**

(45) Date de publication du fascicule du brevet :
24.01.90

(51) Int. Cl.⁵ : **F 16 F 9/50**

(21) Numéro de dépôt : **87400963.2**

(22) Date de dépôt : **24.04.87**

(54) Clapet d'écrétage à ouverture rapide pour élément de suspension hydropneumatique de véhicule lourd.

(30) Priorité : 29.04.86 FR 8606191

(43) Date de publication de la demande :
04.11.87 Bulletin 87/45

(45) Mention de la délivrance du brevet :
24.01.90 Bulletin 90/04

(84) Etats contractants désignés :
DE GB IT

(56) Documents cités :
EP--A-- 149 379
EP--A-- 205 389
US--A-- 3 153 423
US--A-- 4 156 536
US--A-- 4 561 559

(73) Titulaire : **S.A.M.M.- Société d'Applications des Machines Motrices**
**Chemin de la Malmaison**
**F-91570 Bièvres (FR)**

(72) Inventeur : **Joseph, Philippe**
**Quartier Degay Loriol du Comtat**
**F-84200 Carpentras (FR)**
Inventeur : **Perrochat, Jean-Michel**
**103, avenue Verdier**
**F-92120 Montrouge (FR)**
Inventeur : **Marquant, Pierre**
**110, rue Pierre Brossolette Tour Corby-Apt 135**
**F-92320 Chatillon (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention a pour objet un clapet d'écrétage double sens à ouverture rapide pour élément de suspension hydropneumatique de véhicule lourd.

Les éléments de suspension hydropneumatique, en particulier oléopneumatique de véhicule lourd, comprennent des cartouches disposées dans la chambre hydraulique, entre le piston et la chambre de gaz. Ces cartouches amortisseurs sont traversées par le fluide hydraulique alternativement dans chaque sens durant les déplacements du piston dans la chambre hydraulique, et sont à cet effet pourvues de clapets qui peuvent être classiquement constitués d'un obturateur rappelé élastiquement sur son siège par un ressort (US-A 4 156 536).

Ces clapets fonctionnent correctement jusqu'à une certaine vitesse maximum du véhicule. Mais au-dessus de cette vitesse et tout particulièrement en terrain plus ou moins accidenté, il se produit des pics et des chutes de pression hydraulique très rapides vis-à-vis desquels le temps de réponse du clapet est insuffisant. Il en résulte que celui-ci peut s'ouvrir et se fermer à contre temps par rapport aux pics et aux chutes de pression lorsque le véhicule passe sur des bosses ou des creux, ce qui peut provoquer la rupture complète de la suspension du véhicule en raison des efforts brutaux subis par celle-ci.

L'invention a donc pour but de remédier à ce grave inconvénient en réalisant un clapet d'écrétage dont la conception permet à l'élément de suspension auquel il est intégré d'absorber sans dommages des bosses et des creux en terrain accidenté à une vitesse supérieure à la vitesse maximum actuelle des véhicules lourds.

Le clapet d'écrétage double sens à ouverture rapide visé par l'invention comprend un corps creux percé d'une première ouverture d'entrée ou de sortie et d'une seconde ouverture de sortie ou d'entrée d'un fluide hydraulique, et, disposés dans ce corps, les éléments suivants :

a) un tiroir creux monté coulissant à l'intérieur d'une fourrure montée coulissante dans le corps et coaxiale au tiroir suivant l'axe général du clapet ;

b) un organe élastique prenant appui sur le corps et poussant le tiroir en butée contre une extrémité annulaire de la fourrure ainsi que ladite fourrure en butée contre un siège annulaire correspondant du corps ;

c) et la section annulaire d'appui du tiroir sur la fourrure est inférieure à la section annulaire d'appui de la fourrure sur son siège, la fourrure étant en outre percées d'alésages communiquant avec la première ouverture d'entrée, et ces alésages restent obturés par le tiroir tant que le clapet est au repos et débouchent dans l'intérieur de la fourrure et du tiroir et vers la seconde ouverture du corps lorsque le tiroir est écarté de la fourrure sous l'effet d'une pression hydraulique dans la première ouverture très supérieure à la pression hydraulique régnant dans la seconde ouverture du corps et l'intérieur du tiroir et de la fourrure, tandis qu'inversement, une pression dans la seconde ouverture et l'intérieur du tiroir et de la fourrure très supérieure à la pression dans la première ouverture provoque le décollement de la fourrure de son siège d'appui sur le corps, en entraînant le tiroir contre la force de l'organe élastique, ce qui met en communication l'intérieur de la fourrure et du tiroir avec la première ouverture.

Suivant une particularité de l'invention, les sections annulaires ou faces d'appui du tiroir sur la fourrure et d'appui de la fourrure sur son siège sont tronconiques ou sphériques, et ces sections tronconiques ou sphériques s'appuient sur des arêtes correspondantes des sièges, le diamètre de la section annulaire d'appui de la fourrure étant supérieur à celui de la section annulaire du tiroir.

Suivant une autre caractéristique de l'invention, le corps comporte un premier fond percé d'une série de trous périphériques constituant la première ouverture, et qui débouchent dans une chambre annulaire entourant la fourrure et le tiroir, un second fond du corps, opposé au premier fond, étant percé d'un passage central formant ladite seconde ouverture, et la fourrure est pourvue d'une partie terminale tronconique ou sphérique maintenue en appui sur un siège solidaire dudit premier fond du corps lorsque le clapet est au repos, en fermant toute communication entre la chambre annulaire et l'intérieur de la fourrure et du tiroir.

D'autres particularités et avantages de l'invention apparaîtront au cours de la description qui va suivre, faite en référence aux dessins annexes qui en illustrent plusieurs formes de réalisation à titre d'exemples non limitatifs :

— la Figure 1 est une vue en coupe axiale d'un clapet d'écrétage suivant un premier mode de réalisation de l'invention, ce clapet étant au repos ;

— la Figure 2 est une vue en coupe axiale d'un élément de suspension de véhicule lourd équipé d'un clapet d'écrétage à ouverture rapide selon l'invention ;

— la Figure 3 est une vue en coupe axiale à échelle agrandie du clapet d'écrétage équipant l'élément de la Figure 2, ce clapet étant au repos ;

— la Figure 4 est une vue en élévation transversale suivant la flèche F de la Figure 3 ;

— La Figure 5 est une vue en coupe transversale suivant V-V de la Figure 3 ;

— la Figure 6 est une vue en coupe axiale d'un amortisseur d'élément de suspension auquel est intégré un clapet d'écrétage selon les Figures 3 à 5.

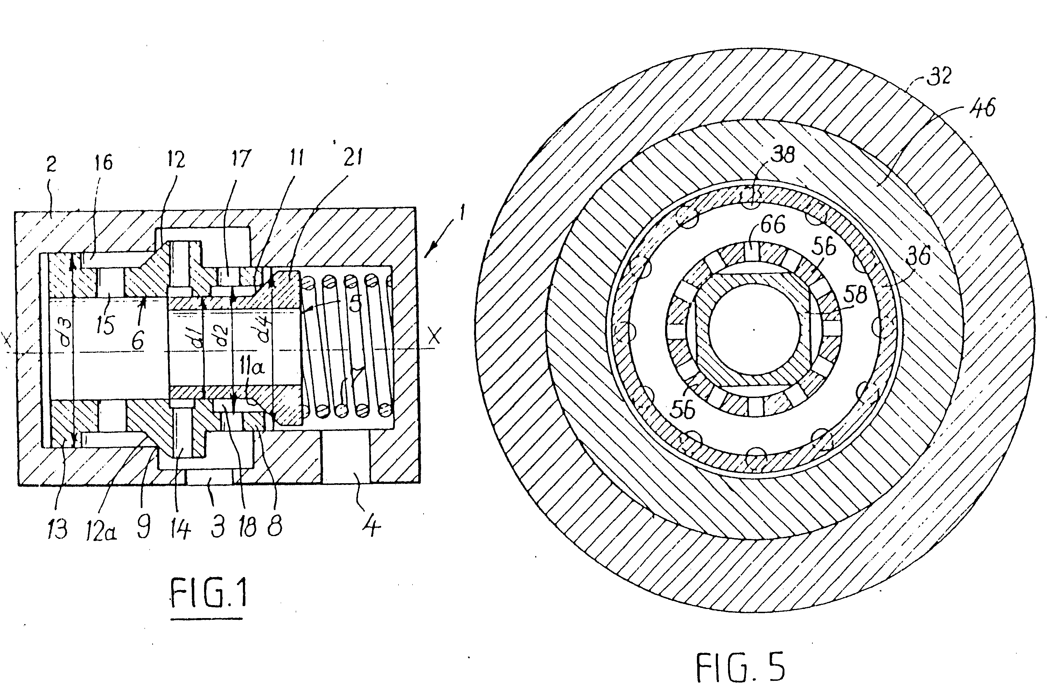

On a représenté à la Figure 1 le principe d'un premier mode de réalisation du clapet d'écrétage double sens à ouverture rapide prévu par l'invention pour équiper un élément de suspension hydropneumatique de véhicule lourd.

Le clapet 1 comprend un corps creux 2 percé d'une première ouverture d'entrée ou de sortie 3 et d'une seconde ouverture de sortie ou d'entrée 4 d'un fluide hydraulique (huile) et, disposés dans le corps 1, les éléments suivants :

a) un tiroir creux 5 monte coulissant à l'intérieur d'une fourrure creuse 6 montée coulissante dans le corps 1 et coaxiale au tiroir 5 suivant l'axe général X-X du clapet ;

b) un organe élastique 7, constitué ici par un ressort hélicoïdal, qui prend appui sur le fond du corps 1 et pousse le tiroir 5 en butée contre un siège annulaire 8 de la fourrure 6, ainsi que cette dernière en butée contre un siège annulaire correspondant 9 du corps 1.

La face ou section annulaire 11 d'appui du tiroir 5 sur la fourrure 6 est tronconique ou sphérique et de même la section annulaire 12 d'appui de la fourrure 6 sur son siège 9 est tronconique ou sphérique, ces surfaces tronconiques ou sphériques 11, 12 s'appuyant sur des sièges respectifs 8, 9. Le diamètre extérieur d4 de la section d'appui 11, c'est-à-dire son plus grand diamètre, est inférieur au diamètre d3 de la section annulaire 12 au niveau de l'arête d'appui de cette dernière sur le siège 9, ce diamètre d3 étant également celui d'une partie terminale 13 saillante de la fourrure 6. Cette dernière est percée d'alesages radiaux 14 communiquant avec la première ouverture 3, ainsi que de lumières radiales 15 faisant communiquer l'intérieur de la fourrure 6 avec une chambre annulaire 16 réservée entre la fourrure 6 et le corps 2, et limitée d'un côté par la section d'appui 12 et de l'autre par la partie terminale 13. L'ouverture 3 débouche également, par des lumières radiales 17 de la fourrure 6, dans une chambre annulaire 18 limitée d'un côté par un épaulement annulaire 19 de la fourrure 6 dans lequel coulisse le tiroir 5, et du côté opposé par la section tronconique 11. Ainsi, le diamètre extérieur d2 de la chambre 18 est supérieur au diamètre d1 de l'épaulement 19 et du tiroir 5 à cet endroit.

Les éléments constitutifs du clapet 1 sont dimensionnés de manière que de légères fuites de fluide hydraulique dues aux jeux de fonctionnement permettent au fluide de passer des alesages 14 à l'intérieur de la fourrure 6 et du tiroir 5 ainsi que de l'ouverture 3 vers la partie extérieure de la section d'appui 11 lorsque le clapet est au repos comme représenté à la Figure 1, les alésages 14 étant alors obturés par le tiroir 5. Il existe par contre un jeu important entre le corps 2 et l'extrémité 21 du tiroir 5 de diamètre d4.

Le fonctionnement du clapet 1 qui vient d'être décrit est le suivant :

— au repos, le ressort 7 maintient la section tronconique 11 du tiroir 5 sur l'arête du siège 8, ainsi que la section tronconique ou sphérique 12 sur l'arête du siège 9, et le tiroir 5 obture les alésages 14. Le passage entre les ouvertures 3 et 4 est alors limité au jeu entre le tiroir 5 et la fourrure 6 à l'emplacement du diamètre d1 et du jeu entre la fourrure 6 et le corps 2 sur le diamètre d4 ;

— si la pression dans l'ouverture 3 et la chambre annulaire 18 est supérieure à la pression à l'intérieur du tiroir 5 et de l'ouverture 4, et que cette différence de pression, appliquée à la section annulaire 11a comprise entre les diamètres d2 et d1 devient supérieure à l'effort antagoniste du ressort 7, le tiroir 5 est repoussé vers la droite sur la Figure 1 en s'écartant de la fourrure 6. De ce fait, les alésages 14 sont mis en communication avec l'intérieur de la fourrure 6 et du tiroir 5, ce qui permet le passage du fluide de l'ouverture 3 vers l'ouverture 4 par une section importante, même pour un faible écartement du tiroir 5 par rapport à la fourrure 6.

D'autre part, au moment de l'ouverture du tiroir 5, la pression hydraulique, appliquée initialement à la section partielle 11a, s'exerce sur la totalité de la section tronconique 11, provoquant un accroissement de l'ouverture du tiroir 5 ;

si inversement, la pression dans l'ouverture 4 et l'intérieur du tiroir 5 ainsi que de la fourrure 6 devient supérieure à la pression dans l'ouverture 3, cette différence de pression est appliquée à la section annulaire 12a comprise entre l'arête du siège 9 et le diamètre d4. Lorsque cette différence de pression produit sur la fourrure 6 et le tiroir 5 un effort axial supérieur à la force antagoniste donnée par l'effort de mise en place du ressort 7, la fourrure 6 est repoussée en s'écartant de son siège 9, ce qui libère un passage pour le fluide entre le siège 9 et la section d'appui 12. Le fluide peut alors s'écouler par l'ouverture 3.

Le principe du clapet illustré à la Figure 1 est applicable à tous systèmes hydrauliques ne nécessitant pas une étanchéité absolue entre deux points, mais nécessitant par contre un écrétage rapide de pointes de pression dans un sens ou dans l'autre, par exemple un amortisseur d'élément de suspension oléopneumatique, avec limitation de l'effort d'amortissement en compression et en détente.

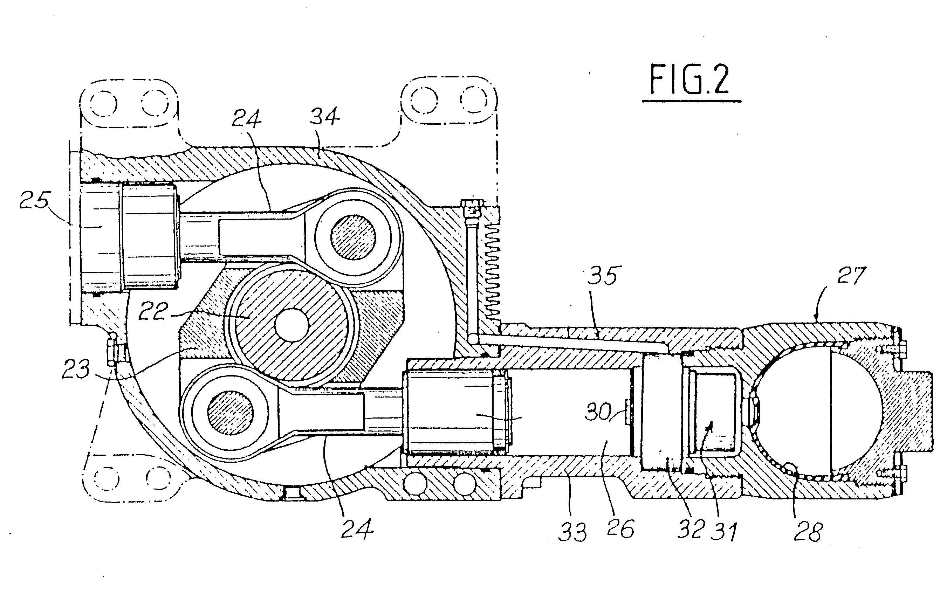

L'élément de suspension représenté à la Figure 2 est décrit en détail dans le document EP-A 149 379 au nom de la Demanderesse. Cet élément comprend un bras 22 support de roue (seule une coupe transversale de ce bras est ici visible et l'extrémité de ce bras opposée à la partie visible au dessin est articulée sur un galet mobile verticalement). Sur un balancier 23 solidaire du bras 22 sont articulées les extrémités des tiges 24 de deux pistons 25 susceptibles de se déplacer simultanément dans des sens opposés lorsque le bras 22 oscille, à l'intérieur de chambres hydrauliques 26. A chaque chambre 26 est associé un accumulateur de gaz 27 à membrane souple 28, et une cartouche amortisseur 29 munie d'un clapet d'écrétage 31 selon l'invention, ces deux dernières pièces étant interposées entre l'extrémité de l'accumulateur 27 et celle de la chambre 26. Une pièce 32 est également interposée entre les extrémités de l'accumulateur 27 et du cylindre 33 délimitant la chambre 26. Dans la pièce 32 ainsi que dans la paroi du cylindre 33 et dans le carter 34 renfermant les tiges 24, est agencé un caloduc 35 décrit dans la demande de brevet français précité, et qui ne fait pas partie de la présente invention.

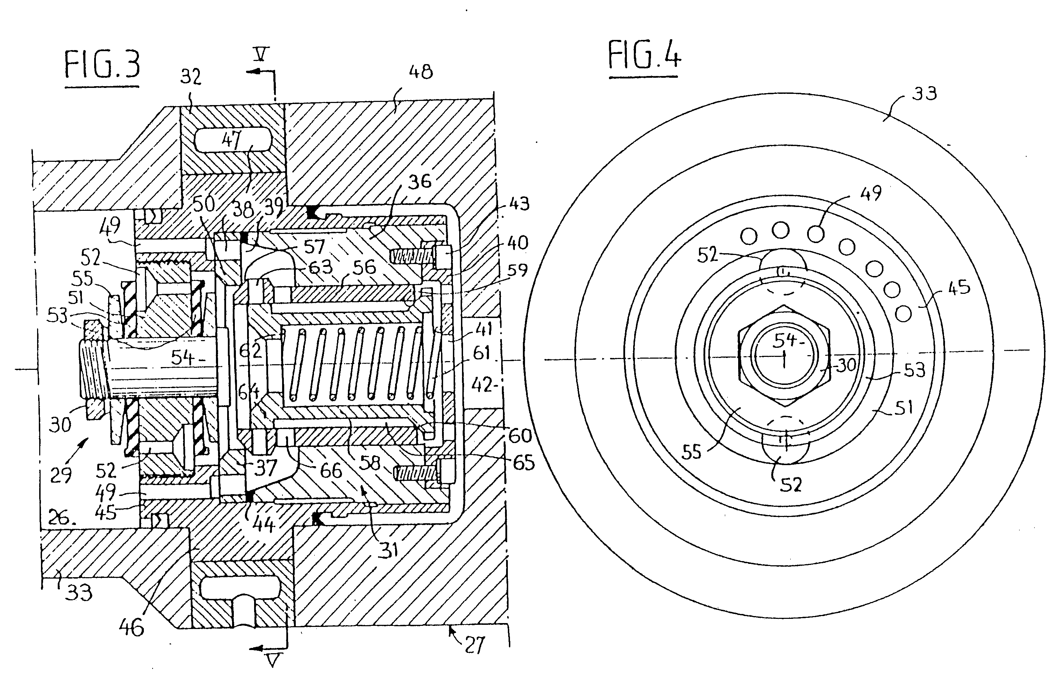

Dans le mode de réalisation industrielle du clapet illustré aux Figures 3 à 5, ce clapet 31 comprend un corps 36 auquel est assujetti un premier fond annulaire 37 percé d'une série de trous périphériques 38 correspondant à la première ouverture 3 de la Figure 1. Un second fond annulaire 40, opposé au fond 37, percé d'un passage central 41 coaxial à un canal axial 42 aboutissant à la membrane souple 28, est rapporté au corps 36 par des vis 43. Un joint d'étanchéité 44 est interposé entre le fond 37 et le corps 36, le fond 37 étant d'autre part maintenu appliqué sur le joint 44 par une couronne 45 d'un carter 46 contenant l'ensemble du clapet 31. Le carter 46 est muni d'un épaulement annulaire 47 s'engageant entre la paroi du cylindre 33 et la paroi 48 de l'accumulateur de gaz 27 pour assurer la retenue du clapet 31.

La couronne 45 est percée sur sa périphérie d'une série de lumières axiales 49 qui débouchent dans les trous 38. D'autre part, la couronne 45 est taraudée pour recevoir un disque 51 percé de deux lumières 52 en forme d'entonnoir et axialement inversées. Deux rondelles souples 53 sont disposées devant les lumières 52 et maintenues en place par une vis axiale 54 traversant le disque 51 et les rondelles 53, des éléments annulaires 55 placés aux extrémités de la vis 54 assurant la retenue des rondelles élastiques 53.

Le dispositif amortisseur constitué par le disque 51, les rondelles 53 et leurs éléments de fixation sur le disque 51, permet la circulation alternée de l'huile de part et d'autre du disque 51 par les lumières 52 en fonction de la pression : en effet, la partie supérieure sur la Figure 3 de la rondelle 53 située du côté de la chambre hydraulique 26 n'obture pas la lumière 52 qui par contre est obturée par la partie supérieure de la rondelle 53 située de l'autre côté du disque 51, ce montage étant inversé dans la moitié inférieure de la Figure 3. Ainsi, lorsque la pression hydraulique dans la chambre 26 augmente, l'huile traverse la lumière supérieure 52 et écarte la rondelle 53 située du côté du clapet 51, tandis que la partie inférieure de la rondelle 53 située du côté de la chambre 26 obture la lumière correspondante 52. Ce processus est inversé lorsque la pression hydraulique dans le clapet 31 devient supérieure à la pression hydraulique dans la chambre 26.

Le clapet 31 comporte une fourrure 56 essentiellement cylindrique, montée coulissante axialement à l'intérieur du corps 36. La fourrure 56 est pourvue d'une partie terminale 57 tronconique (ou sphérique), maintenue en appui sur l'arête d'un siège 50 du fond 37, en fermant alors toute communication entre une chambre annulaire 39 du corps 36 et l'intérieur de la fourrure 56.

La fourrure 56 contient un tiroir coaxial 58 dont l'extrémité opposée au fond 37 présente une section 59 tronconique (ou sphérique) maintenue en appui contre une arête de l'extrémité correspondante de la fourrure 56 par un ressort hélicoïdal 61 prenant appui sur le fond 39 coaxialement au passage 41. L'extrémité opposée du ressort 61 sollicite le tiroir 58 par un bord intérieur saillant 62 de celui-ci.

Des perçages radiaux 63 sont ménagés dans la fourrure 56 au voisinage de sa partie tronconique 57, et communiquent d'un côté avec la chambre annulaire 39, tandis que du côté opposé les perçages 63 sont obturés par une extrémité annulaire 64 du tiroir 58 lorsque le clapet 31 est au repos (Figure 3). La section tronconique 59, saillant extérieurement à l'extrémité du tiroir 58 opposée à son extrémité 64, délimite avec cette dernière et la fourrure 56 un espace annulaire 65 qui communique avec la chambre 39 par des lumières radiales 66 de la fourrure 56.

Le diamètre de l'arête 60 de la fourrure 56 et de la zone de l'alésage de la fourrure, délimitant l'espace annulaire 65 et proche de cette arête 60, est légèrement supérieur au diamètre de coulissement dans la fourrure 56 de l'extrémité saillante 64 du tiroir 58. Ces deux diamètres correspondant respectivement aux diamètres d2 et d1 de la Figure 1.

Enfin, le diamètre intérieur du siège 50 est légèrement supérieur au diamètre de coulissement de la fourrure 56 dans le corps 6. Ces deux diamètres correspondent respectivement aux diamètres d3 et d4 de la Figure 1.

Le fonctionnement du clapet d'écretage 31 a ouverture rapide est le suivant :

Au repos, (Figure 3), la fourrure 56 est en appui par sa section terminale conique 57 sur le siège 50, le tiroir 58 est en appui contre l'extrémité de la fourrure 56 par sa section tronconique 59 et l'extrémité saillante 64 du tiroir 58 obture les lumières radiales 63. Tant que la pression hydraulique dans la chambre 26 ne varie pas trop rapidement, la circulation de l'huile se fait de part et d'autre du disque 51 par les lumières 52 dans les deux sens, sans intervention du clapet d'écrétage 31.

Si maintenant une brusque augmentation de pression se produit dans la chambre hydraulique 26, par suite par exemple du passage sur une bosse à grande vitesse du véhicule, la pression dans les lumières 49, 38 et dans la chambre 39 devient rapidement très supérieure à la pression hydraulique dans l'ouverture 41 et l'intérieur du tiroir 58. Cette pression différentielle s'applique à la section tronconique 59 du tiroir 58 comprise entre l'arête 60 et le diamètre précité de l'extrémité 64 du tiroir 58, et provoque le décollement du tioir 58 de son siège 60. Cet écartement du tiroir 58 de la fourrure 50 découvre alors les lumières 63, de sorte que le fluide s'écoule par celles-ci vers l'intérieur du tiroir 58 et la sortie 41. Corrélativement, dès que le tiroir 58 est légèrement écarté de la fourrure 56, la pression hydraulique s'exerce sur la totalité de la surface tronconique 59 et maintient le tiroir 58 écarté de la fourrure 56 à l'encontre de la force de rappel du ressort 61. De ce fait, le fluide peut s'écouler de la chambre 39 à l'intérieur du tiroir 58 et de là vers la sortie 41. Le clapet 31 revient au repos lorsque la pointe de pression cesse.

Inversement, si une brusque dépression se produit dans la chambre hydraulique 26, par exemple si le véhicule passe à grande vitesse sur un trou, la pression hydraulique dans l'ouverture 41 et l'intérieur du tiroir 58 devient brusquement très supérieure à la pression dans la chambre 39 et les lumières 38.

Lorsqu'à la suite par exemple du passage à grande vitesse du véhicule dans un trou, une dépression brutale se produit dans la chambre hydraulique 26, la pression hydraulique appliquée sur la partie de la section tronconique 57 intérieure par rapport à l'arête d'appui du siège 58, c'est-à-dire la partie de cette section 57 extérieure à la chambre 39, devient nettement supérieure à la pression régnant dans la chambre 39. En raison de la légère différence entre les diamètres du siège 50 et de l'extrémité opposée de la fourrure 56, la pression différentielle qui en résulte exerce sur la fourrure 56 un effort qui l'écarte de son siège 50. De ce fait, le fluide circule ainsi librement du canal 42 à la chambre 26 en passant par la chambre annulaire 39. De même par l'intermédiaire de sa section tronconique 59 d'appui, le tiroir 58 est écarté de l'arête de son siège sur l'extrémité de la fourrure 56 par la pression, et ce contre la réaction du ressort 61, découvrant ainsi les lumières 63. Le fluide à haute pression s'écoule donc alors également par les lumières 63 dans la chambre 39, les lumières 38 et les trous 49 vers la chambre hydraulique 26.

Lorsque la pression dans cette dernière est revenue à son niveau normal, le clapet 31 revient au repos.

Le clapet selon l'invention permet donc d'écrêter dans les deux sens des pointes ou des baisses brutales de la pression hydraulique, grâce à une ouverture très rapide, ce qui évite d'endommager gravement la suspension d'un véhicule lourd roulant à grande vitesse sur un terrain accidenté.

Ce clapet est utilisable notamment dans l'amortisseur du brevet français 85 08 756, ainsi que dans l'élément de suspension du brevet français 85 05 067.

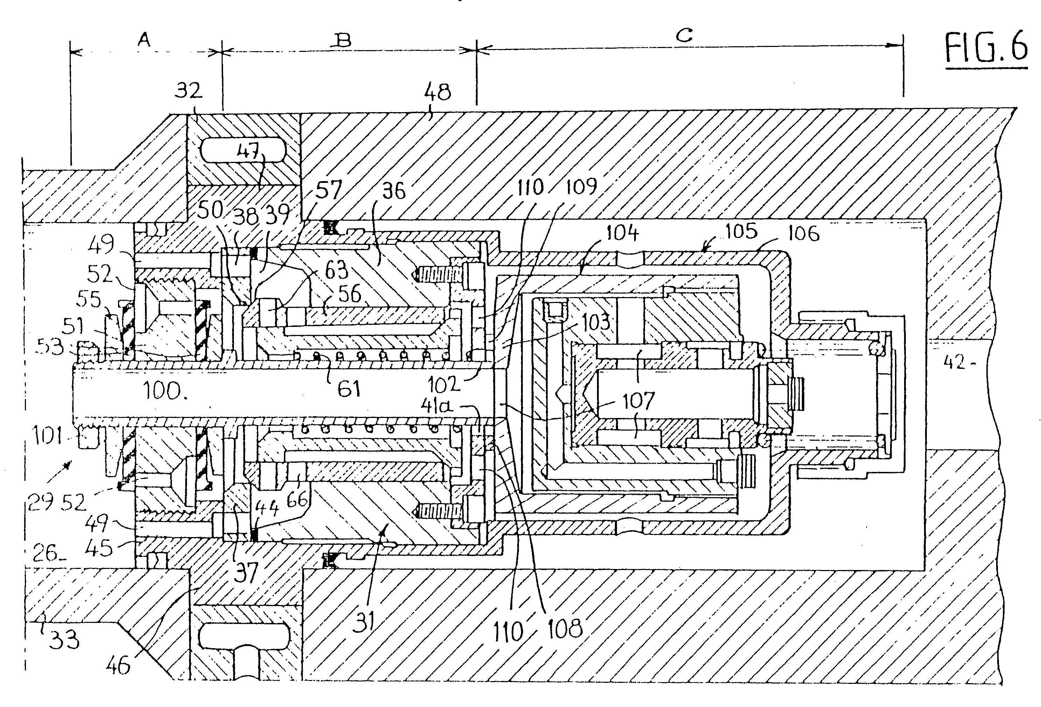

La Figure 6 illustre la mise en œuvre du clapet d'écrétage double sens 31 dans un amortisseur conforme au brevet 85 08 756 auquel il est intégré, cette combinaison étant également visée par l'invention.

Le dispositif de la Figure 6 comprend ainsi, disposés axialement et dans cet ordre dans la chambre hydraulique 26 vers l'accumulateur pneumatique 27 : des moyens amortisseurs A à rondelles élastiques 53, remplissant la même fonction que ceux du clapet 31 mais modifiés, un système de clapet double sens B, constitué par le clapet 31 légèrement modifié, et un filtre d'amortissement C de structure similaire à celle de l'amortisseur à tiroir coulissant décrit dans le brevet 85 08 756.

Sur le plan fonctionnel, le dispositif de la Figure 6 correspond donc à une combinaison du clapet 31 selon l'invention et de l'amortisseur du brevet précité, revenant à interposer le clapet d'écrétage 31 entre le système amortisseur à rondelles et le système de filtre à tiroir coulisssant décrits dans ce brevet.

Les moyens amortisseurs A comprennent une pièce tubulaire 100 qui remplace la vis 54 et porte un écrou 101 de fixation des éléments 55 et 53, et cette pièce 100 traverse axialement le dispositif amortisseur (51, 53, 52) ainsi que le tiroir 58. Son extrémité 102 opposée aux rondelles 53 débouche dans l'ouverture centrale 107 d'un fond 103 d'une fourrure tubulaire 104 coaxiale au tiroir 58, et placée au-delà du fond 40 du clapet 31. L'extrémité 102 est fixée au fond 103 et la fourrure 104 fait partie d'un filtre d'amortissement 105 similaire à celui qui fait l'objet de la demande de brevet FR85 08 756 (= EP-A-205 389, publié 17.12.86), et dont par conséquent la description ne sera pas reprise ici.

Ce filtre comprend un corps tubulaire 106 contenant la fourrure 104 et qui est rapporté au carter 47 ou bien réalisé monopièce avec ce dernier. Le fond 40 du clapet 31 et le fond 103, sont distants d'un intervalle dans lequel s'étendent des extensions axiales 108 du fond 103 séparées par des passages libres 109 pour la circulation de l'huile.

Le fond 40 étant percé de trous périphériques 110 et d'une ouverture centrale 41a, l'huile peut ainsi circuler autour du tube 100, de part et d'autre du fond 40 et entre ce dernier et le fond 103. Le ressort 61 entoure le tube 100 et s'appuie sur le fond 40.

## Revendications

1. Clapet d'écrétage à ouverture rapide pour élément de suspension hydropneumatique de véhicule lourd, caractérisé en ce qu'il comprend un corps creux (2, 36) percé d'une première ouverture d'entrée ou de sortie (3, 38) et d'une seconde ouverture de sortie ou d'entrée (4, 41) d'un fluide hydraulique, et disposés dans ce corps, les éléments suivants :

a) un tiroir creux (5, 58) monté coulissant à l'intérieur d'une fourrure (6, 56) montée coulissante dans le corps et coaxiale au tiroir (5, 58) suivant l'axe général (XX) du clapet ;

b) un organe élastique (7, 61) prenant appui sur le corps et poussant le tiroir en butée contre une extrémité annulaire de la fourrure ainsi que ladite fourrure (6, 56) en butée contre un siège annulaire correspondant (9, 50) du corps ;

c) et la section annulaire d'appui (11, 59) du tiroir (5, 58) sur la fourrure (6, 56) est inférieure à la section annulaire d'appui (12, 57) de la fourrure sur son siège (9, 50), la fourrure étant en outre percée d'alésages radiaux (17, 63) communiquant avec la première ouverture d'entrée (3 ; 38, 39) et ces alésages (17, 63) restent obturés par le tiroir tant que le clapet est au repos et débouchent dans l'intérieur de la fourrure (6, 56) et du tiroir (5, 58) et vers la seconde ouverture (4, 41) du corps lorsque le tiroir est écarté de la fourrure sous l'effet d'une pression hydraulique dans la première ouverture (3 ; 38, 39) très supérieure à la pression hydraulique régnant dans la seconde ouverture (4, 41) du corps et l'intérieur du tiroir et de la fourrure, tandis qu'inversement une pression dans la seconde ouverture (4, 41) et l'intérieur du tiroir (5, 58) et de la fourrure (6, 56) très supérieure à la pression dans la première ouverture (3 ; 38, 39) provoque le décollement de la fourrure de son siège (9, 50) d'appui sur le corps en entraînant le tiroir contre la force de l'organe élastique (7, 61), ce qui met en communication l'intérieur de la fourrure et du tiroir avec la première ouverture.

2. Clapet selon la revendication 1, caractérisé en ce que les sections annulaires (11, 59) d'appui du tiroir (5, 58) sur la fourrure (6, 56) et d'appui (12, 57) de la fourrure sur son siège (9, 50) sont tronconiques ou sphériques, le diamètre (d3) de la section annulaire d'appui (12) de la fourrure (6) étant supérieur à celui (d4) de la section annulaire (11) du tiroir (5).

3. Clapet selon les revendications 1 et 2, caractérisé en ce que le corps (36, 37) comporte un premier fond annulaire (37) percé d'une série de trous périphériques (38) constituant la première ouverture, et qui débouchent dans une chambre annulaire (39) enveloppant la fourrure (56) et le tiroir (58), un second fond (40) du corps, opposé au premier fond (37) étant percé d'un passage central (41) formant ladite seconde ouverture, et la fourrure (56) est pourvue d'une partie terminale tronconique ou sphérique (57) maintenue en appui sur son siège (50) solidaire dudit premier fond (37) du corps lorsque le clapet (31) est au repos, en fermant alors toute communication entre la chambre annulaire (39) et l'intérieur de la fourrure (56) et du tiroir (58).

4. Clapet selon la revendication 3, caractérisé en ce que le siège (50) de la fourrure (56) est constitué par une arête du premier fond formé par une pièce annulaire (37) rapportée au corps (36) et percée à sa périphérie d'une série de trous (38) communiquant d'un côté avec des lumières axiales (49) d'un carter (47) contenant le clapet (31), et de l'autre côté avec la chambre annulaire (39).

5. Clapet selon l'une des revendications 3 et 4, caractérisé en ce que des perçages radiaux (63) sont ménagés dans la fourrure (56) au voisinage de sa partie terminale tronconique (57) et communiquent d'un côté avec la chambre annulaire (39) tandis que du côté opposé ces perçages (63) sont obturés par une extrémité annulaire (64) du tiroir (58) lorsque le clapet est au repos, la section annulaire (59) d'appui du tiroir (58) sur la fourrure (56) étant ménagée à son extrémité opposée à celle (64) qui obture les perçages (63) de la fourrure (56) et formée par une section tronconique ou sphérique saillant extérieurement du tiroir (58) de manière à réserver un espace annulaire (65) entre le tiroir et la fourrure (56), cette section tronconique ou sphérique étant en appui sur l'arête d'un siège (60) de la fourrure (56).

6. Clapet selon la revendication 5, caractérisé en ce que des lumières (66) sont agencées radialement dans la fourrure (56) au voisinage des alésages radiaux (63) de façon à mettre en communication la chambre annulaire (39) et l'espace annulaire (65) entre le tiroir et la fourrure, cet espace annulaire (65) étant limité axialement par la section tronconique ou sphérique (59) du tiroir (58) et par son extrémité annulaire (64) saillant extérieurement et qui ferme les alésages radiaux (63) de la fourrure (56) lorsque le clapet (31) est au repos.

7. Clapet selon les revendications 5 et 6, caractérisé en ce que l'organe élastique est constitué d'un ressort hélicoïdal (61) dont une extrémité s'appuie sur le second fond (40) du corps (36, 37, 40) autour de son passage central (41), et dont l'autre extrémité sollicite un épaulement annulaire (62) du tiroir (58), saillant intérieurement à son extrémité.

8. Dispositif caractérisé en ce qu'il comprend des moyens amortisseurs (A) à rondelles élastiques (53) portées par une pièce axiale (100), un clapet d'écrétage (31) double sens selon l'une quelconque des revendications 1 à 7, traversé axialement par ladite pièce (100), et un filtre d'amortissement (c, 105) solidaire du clapet (31) et agencé de manière à communiquer avec l'intérieur de ce dernier.

9. Dispositif selon la revendication 8, caractérisé en ce que les moyens amortisseurs (51, 52, 53) et le tiroir (58) sont traversés axialement par une pièce tubulaire (100) dont l'extrémité (102) opposée aux rondelles élastiques (53) débouche dans une fourrure tubulaire (104) du filtre (105), des moyens (108, 109) étant prévus pour permettre le passage du fluide hydraulique d'un intervalle axial entre le second fond (40) du corps (36) du clapet (31) et le fond (103) de la fourrure tubulaire (104) et l'intérieur du tiroir (58) par l'ouverture centrale (41a) dudit second fond (40) (Figure 6).

## Claims

1. Rapidly opening peak-clipping valve for a hydropneumatic suspension element of a heavy-vehicle, characterized in that it comprises a hollow body (2, 36) provided with a first inlet or outlet opening (3, 38) and a second outlet or inlet opening (4, 41) for a hydraulic fluid and, disposed in said body, the following elements :

a) a hollow slide (5, 58) slidably mounted inside a sleeve (6, 56) which is slidably mounted in the body and coaxial with the slide (5, 58) on the general axis (xx) of the valve ;

b) an elastic element (7, 61) bearing against the body and biasing the slide into abutment against an annular end portion of the sleeve and said sleeve (6, 56) into abutment against a corresponding annular seat (9, 50) of the body ;

c) and the annular bearing section (11, 59) of the slide (5, 58) on the sleeve (6, 56) is less than the annular bearing section (12, 57) of the sleeve on its seat (9, 50), the sleeve being moreovor provided with radial ports (17, 63) communicating with the first inlet opening (3 ; 36, 39) and said ports (17, 63) remaining closed by the slide as long as the valve is in a state of rest and communicating with the interior of the sleeve (6, 56) and the slide (5, 58) and the second opening (4, 41) of the body when the slide is moved away from the sleeve under the effect of a hydraulic pressure in the first opening (3 ; 38, 39) which is very much higher than the hydraulic pressure prevailing in the second opening (4, 41) of the body and the interior of the slide and the sleeve, while, inversely, a pessure in the second opening (4, 41) and inside the slide (5, 58) and the sleeve (6, 56) which is very much higher than the pressure in the first opening (3 ; 38, 39) causes the sleeve to move away from its seat (9, 50) by which it bears against the body in carrying the slide along therewith against the force exerted by the elastic element (7, 61), which puts the interior of the sleeve and the slide in communication with the first opening.

2. Valve according to claim 1, characterized in that the annular bearing section (11, 59) of the slide (5, 58) against the sleeve (6, 56) and the annular bearing section (12, 57) of the sleeve against its seat (9, 50) are frustoconical or spherical, the diameter (d3) of the annular bearing section (12) of the sleeve (6) being larger than the diameter (d4) of the annular bearing section (11) of the slide (5).

3. Valve according to claims 1 and 2, characterized in that the body (36, 37) has a first annular end wall (37) provided with a series of peripheral apertures (38) constituting the first opening and which open into an annular chamber (39) surrounding the sleeve (50) and the slide (58), a second end wall (40) of the body opposed to the first end wall (37) being provided with a central passage (41) forming said second opening, and the sleeve (56) is provided with a frustoconical or spherical end portion (57) which is maintained in bearing relation to its seat integral with said first end wall (37) of the body when the valve is in a state of rest in then closing any communication between the annular chamber (39) and the interior of the sleeve (56) and the slide (58).

4. Valve according to claim 1, characterized in that the soat (50) of the sleeve (56) is constituted by an edge of the first end wall formed by an annular element (37) mounted on the body (36) and provided on its periphery with a series of apertures (38) communicating on one side with axial ports (49) of a housing (47) containing the valve (31), and on the other side with the annular chamber (39).

5. Valve according to one of the claims 3 and 4, characterized in that radial ports (63) are provided in the sleeve (56) in the vicinity of its frustoconical end portion (57) and communicate on one side with the annular chamber (39) while on the opposite side said ports (63) are closed by an annular end portion (64) of the slide (58) when the valve is in a state of rest, the annular bearing section (59) of the slide (58) against the sleeve (56) being provided at its end opposed to the end portion (64) which closes the ports (63) of the sleeve (56) and formed by an outwardly projecting frustoconical or spherical section of the slide (58) so as to define an annular space (65) between the slide and the sleeve (56), said frustoconical or spherical section being in bearing relation to the edge of a seat (60) of a sleeve (56).

6. Valve according to claim 5, characterized in that apertures (66) are provided radially in the sleeve (56) in a vicinity of the radial ports (63) so as to put the annular chamber (39) and the annular space (65) between the slide and the sleeve in communication, said annular space (65) being axially defined by the frustoconical or spherical section (59) of the slide (58) and by its outwardly projecting annular end portion (64), which closes the radial ports (63) of the sleeve (56) when the valve (31) is in a state of rest.

7. Valve according to claims 5 and 6, characterized in that the elastic element is constituted by a coil spring (61) having one end bearing against the second end wall (40) of the body (36, 37, 40) around its central passage (41) and an opposite end which biases an annular shoulder (62) of the slide (58) which inwardly projects at its end.

8. Device characterized in that it comprises shock-absorbing means (A) employing elastic washers (53), carried by an axial member (100), a double action peakclipping valve (31) according to any one of the claims 1 to 7, axially traversed by said member (100) and a shock-absorbing filter (C, 105) integral with the valve (31) and so adapted as to communicate with the interior of said valve.

9. Device according to claim 8, characterized in that the shock-absorbing means (51, 52, 53) and the slide (58) have axially extending therethrough a tubular member (100) whose end portion (102) opposed to the elastic whashers (53) opens into a tubular sleeve (104) of the filter (105), means (108, 109) being provided for permitting the passage of the hydraulic fluid from an axial gap between the second end wall (40) of the body (36) of the valve (31) and the end wall (103) of the tubular member (104 and the interior of the slide (58) through the central opening (41a) of said second end wall (40) (fig. 6).

## Patentansprüche

1. Schnellöffnendes Begrenzungsventil für ein hydropneumatisches Aufhängungselement eines Schwerfahrzeuges, dadurch gekennzeichnet, daß es einen Hohlkörper (2, 26) umfaßt, in den eine erste Einlaß- oder Auslaßöffnung (3, 28) und eine zweite Auslaß- oder Einlaßöffnung (4, 41) für ein hydraulisches Fluid geborht sind, und in diesem Körper die folgenden Bauelemente angeordnet sind :

a) Ein hohler Ventilschieber (5, 58), der verschiebbar in Inneren einer Büchse (6, 56) angebracht ist, die verschiebbar in dem Körper und koaxial zu dem Ventilschieber (5, 58) längs der Hauptachse (XX) des Ventils angeordnet ist,

b) eine elastische Einrichtung (7, 61), die an dem Körper anliegt und den Ventilschieber in eine Anlage an einem ringförmigen Ende der Büchse drückt, so daß diese Büchse (6, 56) an einem entsprechenden Ringsitz (9, 50) des Körpers anliegt,

c) wobei der ringförmige Anlageabschnitt (11, 59) des Ventilschiebers (5, 58) an der Büchse (6, 56) kleiner als der ringförmige Anlageabschnitt (12, 57) der Büchse an ihrem Sitz (9, 50) ist, in der Büchse weiterhin radiale Bohrungen (17, 63) ausgebildet sind, die mit der ersten Einlaßöffnung (3, 38, 39) verbunden sind, wobei die Bohrungen (17, 63) durch den Ventilschieber geschlossen gehalten sind, solange das Ventil nicht arbeitet, und in das Innere der Büchse (6, 56) und des Ventilschiebers (5, 58) sowie zur zweiten Öffnung (4, 41) des Körpers münden, wenn der Ventilschieber von der Büchse unter der Wirkung eines hydraulischen Fluides in der ersten Öffnung (3, 38, 39) getrennt ist, dessen Druck erheblich über dem hydraulischen Druck liegt, der in der zweiten Öffnung (4, 41) des Körpers und im Inneren des Ventilschiebers und der Büchse herrscht, während umgekehrt ein Druck in der zweiten Öffnung (4, 41) und im Inneren des Ventilschiebers (5, 58) und der Büchse (6, 56), der wesentlich über dem Druck in der ersten Öffnung (3, 38, 39) liegt, zu einem Abheben der Büchse von ihrem Sitz (9, 50) am Körper führt, wobei der Ventilschieber gegen die Kraft der elastischen Einrichtung (7, 61) mitgenommen wird, wodurch eine Verbindung zwischen dem Inneren der Büchse und des Ventilschiebers und der ersten Öffnung hergestellt wird.

2. Ventil nach Anspruch 1, dadurch gekennzeichnet, daß der ringförmige Anlageabschnitt (11, 59) des Ventilschiebers (5, 58) an der Büchse (6, 56) und der ringförmige Anlageabschnitt (12, 57) der Büchse an ihrem Sitz (9, 50) kegelstumpfförmig oder kugelförmig ausgebildet sind, wobei der Durchmesser (d3) des ringförmigen Anlageabschnittes (12) der Büchse (6) größer als der Durchmesser (d4) des ringförmigen Abschnittes (11) des Ventilschiebers (5) ist.

3. Ventil nach Anspruch 1 und 2, dadurch gekennzeichnet, daß der Körper (36, 37) einen ersten ringförmigen Boden (37), in dem eine Reihe von Umfangslöchern (38) ausgebildet ist, die die erste Öffnung bilden und die in einer Ringkammer (39) münden, die die Büchse (56) und den Ventilschieber (58) umgibt, und einen zweiten Boden (40) des Körpers aufweist, der dem ersten Boden (37) gegenüberliegt und in dem ein mittlerer Kanal (41) ausgebildet ist, der die zweite Öffnung bildet, wobei die Büchse (56) mit einem kegelstumpfförmigen oder kugelförmigen Endabschnitt (57) versehen ist, der in Anlage an dem Sitz (50) gehalten ist, der in einem Stück mit dem ersten Boden (37) des Körpers ausgebildet ist, wenn das Ventil (31) nicht arbeitet, so daß somit die Verbindung zwischen der Ringkammer (39) und dem Inneren der Büchse (56) und des Ventilschiebers (58) unterbrochen ist.

4. Ventil nach Anspruch 3, dadurch gekennzeichnet, daß der Sitz (50) der Büchse (56) aus einer Abschlußkante des ersten Bodens besteht, die von einem ringförmigen Teil (37) gebildet wird, der an den Körper (36) angesetzt ist und an seinem Umfang mit einer Reihe von Löchern (31) versehen ist, die einerseits mit axialen Langlöchern (49) eines Gehäuses (47), das das Ventil (31) enthält, und andererseits mit der Ringkammer (39) verbunden sind.

5. Ventil nach einem der Ansprüche 3 und 4, dadurch gekennzeichnet, daß radiale Bohrungen (63) in der Büchse (56) in der Nähe ihres kegelstumpfförmigen Endabschnittes (57) vorgesehen sind, die auf einer Seite mit der Ringkammer (39) verbunden sind, während die Bohrungen (63) auf der anderen Seite durch ein ringförmiges Ende (64) des Ventilschiebers (58) verschlossen sind, wenn das Ventil nicht arbeitet, wobei der ringförmige Anlageabschnitt (59) des Ventilschiebers (58) an der Büchse (56) an seinem gegenüberliegenden Ende, das die Bohrungen (63) der Büchse (56) verschließt, ausgespart und mit einem kegelstumpfförmigen oder kugelförmigen Abschnitt ausgebildet ist, der vom Ventilschieber (58) nach außen vorsteht, derart, daß ein Ringraum (65) zwischen dem Ventilschieber und der Büchse (56) bleibt, wobei der kegelstumpfförmige oder kugelförmige Abschnitt an der Kante eines Sitzes (60) der Büchse (56) anliegt.

6. Ventil nach Anspruch 5, dadurch gekennzeichnet, daß die Langlöcher (66) radial in der Büchse (56) in der Nähe der radialen Bohrungen (63) derart angeordnet sind, daß eine Verbindung der Ringkammer (39) und des Ringraumes (65) im Ventilschieber und in der Büchse hergestellt ist, welcher Ringraum (65) axial durch den kegelstumpfförmigen oder kugelförmigen Abschnitt (59) des Ventilschiebers (58) und sein ringförmiges Ende (64), das nach außen vorsteht, begrenzt ist, und die radialen Bohrungen (63) der Büchse (56) schließt, wenn das Ventil (31) nicht arbeitet.

7. Ventil nach Anspruch 5 und 6, dadurch gekennzeichnet, daß die elastische Einrichtung aus einer Schraubenfeder (61) besteht, deren eines Ende am zweiten Boden (40) des Körpers (36, 37, 40) um den mittleren Kanal (41) anliegt, und deren anderes Ende an einer Ringschulter (62) des Ventilschiebers (58) befestigt ist, die an ihrem Ende nach innen vorsteht.

8. Vorrichtung, dadurch gekennzeichnet, daß sie Dämpfungsmittel (A) in Form von elastischen Scheiben (53) die von einem axialen Teil (100) gehalten sind, ein Zweirichtungsbegrenzungsventil nach einem der Ansprüche 1 bis 7, durch das das Teil (100) axial hindurchgeht, und ein Dämpfungsfilter (C, 105) umfaßt, das fest am Ventil (31) angebracht ist, und so angeordnet ist, daß es mit dem Innenraum des letzteren in Verbindung steht.

9. Vorrichtung nach Anspruch 8, dadurch gekennzeichnet, daß durch die Dämpfungsmittel (51, 52, 53) und den Ventilschieber (58) axial ein rohrförmiges Teil (100) hindurchführt, dessen Ende (102) den elastischen Scheiben (53) gegenüber in ener rohrförmigen Büchse (104) des Filters (105) mündet, wobei Mittel (108, 109) vorgesehen sind, die einen Durchgang von hydraulischen Fluid von einem axialen Zwischenraum zwischem dem zweiten Boden (40) des Körpers (36) des Ventils (31) und dem Boden (103) der rohrförmigen Büchse (104) und zum Inneren des Ventilschiebers (58) über eine zentrale Öffnung (41a) des zweiten Bodens (40) erlaubt (Figur 6).

FIG. 5

FIG.1

FIG.2

FIG.4

FIG.3

FIG.6

EP 0 244 314 B1